(19) **Europäisches Patentamt**

**European Patent Office**

**Office européen des brevets**

(11) **EP 1 335 581 A1**

(12) **EUROPEAN PATENT APPLICATION**

(43) Date of publication:
13.08.2003 Bulletin 2003/33

(51) Int Cl.$^7$: **H04N 1/48**, G01S 17/89

(21) Application number: 03075252.1

(22) Date of filing: 27.01.2003

(84) Designated Contracting States:
**AT BE BG CH CY CZ DE DK EE ES FI FR GB GR HU IE IT LI LU MC NL PT SE SI SK TR**
Designated Extension States:
**AL LT LV MK RO**

(30) Priority: **06.02.2002 US 67927**

(71) Applicant: **EASTMAN KODAK COMPANY**
**Rochester, New York 14650 (US)**

(72) Inventors:
• **Ray, Lawrence Allen, Patent Legal Staff**
**Rochester, New York 14650-2201 (US)**
• **Gabello, Louis R., Patent Legal Staff**
**Rochester, New York 14650-2201 (US)**
• **Revelli, Joseph F., Jr., Patent Legal Staff**
**Rochester, New York 14650-2201 (US)**
• **Whipple, Dennis J., Patent Legal Staff**
**Rochester, New York 14650-2201 (US)**

(74) Representative: **Haile, Helen Cynthia**
**Kodak Limited**
**Patent, W92-3A,**
**Headstone Drive**
**Harrow, Middlesex HA1 4TY (GB)**

(54) **Method and apparatus for a color sequential scannerless range imaging system**

(57)    A color scannerless range imaging system comprises an illumination system for illuminating a scene with modulated illumination of a predetermined modulation frequency, whereby some of the modulated illumination is reflected from objects in the scene; a sequentially selectable color filter arrangement positioned in an optical path of the reflected illumination and comprised of a first color filter that preferentially transmits the reflected modulated illumination and a plurality of other color filters that preferentially transmit reflected unmodulated illumination; a control system for driving the color filter arrangement to sequentially provide each of the color filters in the optical path; an image intensifier for modulating the reflected modulated illumination from the scene with the predetermined modulation frequency, thereby generating phase images needed for range information; and an image capture system for capturing a plurality of images output by the image intensifier, including a plurality of phase images corresponding to the reflected modulated illumination and a plurality of color images of reflected unmodulated illumination corresponding to color in the scene.

FIG. 1

EP 1 335 581 A1

**Description**

**FIELD OF THE INVENTION**

The present invention is in the field of three-dimensional image capture and in particular capturing a color texture image in conjunction with a scannerless range imaging system.

**BACKGROUND OF THE INVENTION**

Standard image capture systems will capture images, such as photographic images, that are two-dimensional representations of the three-dimensional world. In such systems, projective geometry best models the process of transforming the three-dimensional real world into the two-dimensional images. In particular, much of the information that is lost in the transformation is in the distance between the camera and image points in the real world. Methods and processes have been proposed to retrieve or record this information. Some methods, such as one based on a scanner from Cyberware, Inc., use a laser to scan across a scene. Variations in the reflected light are used to estimate the range to the object. However, these methods require the subject to be close (e.g., within 2 meters) to the camera and are typically slow. Stereo imaging is a common example of another process, which is fast on capture but requires solving the "correspondence problem", that is, the problem of finding corresponding points in the two images. This can be difficult and limit the number of pixels having range data, due to a limited number of feature points that are suitable for the correspondence processing.

Another method described in U.S. Patent 4,935,616 (and further described in the Sandia Lab News, vol. 46, No. 19, September 16, 1994), which issued June 19, 1990 in the name of Marion W. Scott, provides a scannerless range imaging system using either an amplitude-modulated high-power laser diode or an array of amplitude-modulated light emitting diodes (LEDs) to completely illuminate a target scene. Conventional optics confine the target beam and image the target onto a receiver, which includes an integrating detector array sensor having hundreds of elements in each dimension. The range to a target is determined by measuring the phase shift of the reflected light from the target relative to the amplitude-modulated carrier phase of the transmitted light. To make this measurement, the gain of an image intensifier (in particular, a micro-channel plate) within the receiver is modulated at the same frequency as the transmitter, so the amount of light reaching the sensor (a charge-coupled device) is a function of the range-dependent phase difference. A second image is then taken without receiver or transmitter modulation and is used to eliminate non-range-carrying intensity information. Both captured images are registered spatially, and a digital processor is used to operate on these two frames to extract range. Consequently, the range associated with each pixel is essentially measured simultaneously across the whole scene.

The preferred method of estimating the range in the '616 patent uses a pair of captured images, one image with a destructive interference caused by modulating the image intensifier, and the other with the image intensifier set at a constant voltage. However, a more stable estimation method uses a series of at least three images, each with modulation applied to the image intensifier, as described in commonly assigned U. S. Patent No. 6,118,946, entitled "Method and Apparatus for Scannerless Range Image Capture Using Photographic Film" and issued Sep. 12, 2000 in the names of Lawrence A. Ray and Timothy P. Mathers. In that patent, the distinguishing feature of each image is that the phase of the image intensifier modulation is unique relative to modulation of the illuminator. If a series of n images are to be collected, then the preferred arrangement is for successive images to have a phase shift of $\frac{2\pi}{n}$ radians (where n is the number of images) from the phase of the previous image. However, this specific shift is not required, albeit the phase shifts need to be unique. The resultant set of images is referred to as an image bundle. The range at a pixel location is estimated by selecting the intensity of the pixel at that location in each image of the bundle and performing a best fit of a sine wave of one period through the points. The phase of the resulting best-fitted sine wave is then used to estimate the range to the object based upon the wave-length of the illumination frequency.

An image intensifier operates by converting photonic energy into a stream of electrons, amplifying the number of electrons within this stream and then converting the electrons back into photonic energy via a phosphor plate. One consequence of this process is that color information is lost. Since color is a useful property of images for many applications, a means of acquiring the color information that is registered along with the range information is extremely desirable. One approach to acquiring color is to place a dichromatic mirror in the optical path before the microchannel plate. Following the mirror a separate image capture plane (i.e., a separate image sensor) is provided for the range portion of the camera and another image capture plane (another sensor) is provided for the color texture capture portion of the camera. This is the approach taken by 3DV Technology with their Z-Cam product. Besides the added expense of two image capture devices, there are additional drawbacks in the need to register the two image planes precisely, together with alignment of the optical paths. Another difficulty is collating image pairs gathered by different sources.

Another approach is described in detail in commonly assigned copending application Serial No. 09/572,522, entitled "Method and Apparatus for a Color Scannerless Range Image System" and filed May 17, 2000 in the names of Lawrence Allen Ray and Louis R. Gabello. In this system, a primary optical path is established for directing image light toward a single image responsive element. A beamsplitter located in the primary optical path separates the image light into two channels, a first channel including an infrared component and a second channel including a color texture component. One of the channels continues to traverse the primary optical path and the other channel traverses a secondary optical path distinct from the primary path. A modulating element is operative in the first channel to receive the infrared component and a modulating signal, and to generate a processed infrared component with phase data indicative of range information. An optical network is provided in the secondary optical path for recombining the secondary optical path into the primary optical path such that the processed infrared component and the color texture component are directed toward the single image responsive element. While this approach avoids the added expense of two image capture devices, there continues to be the need to register the two image planes precisely, together with alignment of the optical paths.

Another approach is to capture an image bundle by using two interchangeable optical assemblies: one optical assembly for the phase image portion and a separate optical element for the color texture image portion. This approach is described in detail in commonly assigned copending application Serial No. 09/451,823, entitled "Method and Apparatus for a Color Scannerless Range Image System" and filed November 30, 1999 in the names of Lawrence Allen Ray, Louis R. Gabello and Kenneth J. Repich. The drawback of this approach is the need to switch lenses and the possible misregistration that might occur due to the physical exchange of lens elements. There is an additional drawback in the time required to swap the two optical assemblies, and the effect that may have on the spatial coincidence of the images.

Commercially available image intensifiers usually have a preferred sensitivity to infrared light. This is intentional as a typical application of such devices is for night-vision, where the best detectable radiation is infrared. However, these devices are still reactive to visible light, though at a lower sensitivity. It is known, in certain cases, to apply color filters to an image intensifier. In U.S. Patent No. 4,374,325, entitled "Image intensifier arrangement with an in situ formed output filter", an image intensifier device is provided with color filters on its input and output surfaces so as to intensify a color image without losing the color content. Each filter consists of an array of red, green and blue elements and these elements are precisely aligned in both input and output filters to avoid degradation of the color content. A method of producing the output filter in situ is described to provide the required accuracy of alignment. In U.S. Patent No. 5,233,183, entitled "Color image intensifier device and method for producing same", a four color system is specified in which a color image intensifier device includes infra-red filters in an RGB input matrix and a narrow band output filter is assigned to represent IR information in the RGB output matrix. In each of these cases, the output image from the intensifier is adapted for human viewing; thus the output image needs to reconverted back to a color image, and hence the need for a second color filter behind the phosphor element at the output of the intensifier. In U.S. Patent No. 5,161,008, entitled "Optoelectronic image sensor for color cameras", an image sensor includes an image intensifier arranged between an interline type semiconductor sensor, coupled to the output of the intensifier, and a color stripe filter disposed in front of the photocathode such that one color stripe of the color stripe filter is associated with one column of light-sensitive elements of the semiconductor sensor.

In copending U. S. patent application No. 09/631,601, entitled "Method and Apparatus for a Color Scannerless Range Imaging System", which was filed August 3, 2000 in the names of Lawrence A. Ray and Louis R. Gabello, a color filter array is introduced prior to the photo-cathode on the microchannel plate in the intensifier, where the color filter array is matched to the spatial channel pattern of the microchannel plate in order to provide the intensifier with the capability of producing color images. The color filter array, which comprises a pattern of four distinct color filters, e.g., red, blue, green and infrared filters, is arranged into a hexagonal lattice designed to match the channel pattern of the microchannel plate. As is well known, the sensitivity of an image intensifier is partly derived from the fact that the photocathode is mostly responsive to near-infrared radiation (400 - 900 nanometers), part of which is invisible to the human eye. Accordingly, the modulated illumination is restricted to the infra-red region, and the visible region separated by the color filter array is therefore substantially unaffected by the modulation.

It is possible to implement the basic teachings of at least some of the aforementioned systems, e.g., the Scott and Ray et al. patents, in a system that is an attachment to a normal camera system. As a result, a standard camera system is converted into a range capture system by changing the optical system. For example, a standard lens is replaced and an illumination device is attached. The present invention describes a means of overcoming the loss of color information while maintaining the desirable feature of incorporating the range measurement function as an attachment to a normal camera system.

## SUMMARY OF THE INVENTION

The present invention is directed to overcoming one or more of the problems set forth above. Briefly summarized, according to one aspect of the invention, a color scannerless range imaging system comprises an illumination system for illuminating a scene with modulated illumination of a predetermined modulation frequency, whereby some of the modulated illumination is reflected from objects in the scene; a sequentially selectable color filter arrangement positioned in an optical path of the reflected illumination and comprised of a first color filter that preferentially transmits the reflected modulated illumination and a plurality of other color filters that preferentially transmit reflected unmodulated illumination; a control system for driving the color filter arrangement to sequentially provide each of the color filters in the optical path; an image intensifier for modulating the reflected modulated illumination from the scene with the predetermined modulation frequency, thereby generating phase images from which the range information is obtained; and an image capture system for capturing a plurality of images output by the image intensifier, including (a) a plurality of phase images corresponding to the reflected modulated illumination and (b) a plurality of color images of reflected unmodulated illumination corresponding to color in the scene.

In one embodiment, the sequentially selectable color filter arrangement is a color filter wheel that integrates the first color filter that preferentially transmits the reflected modulated illumination, from which the range is obtained, and the plurality of other color filters that preferentially transmit reflected unmodulated illumination, from which the color texture image is obtained. In another embodiment, the color filter arrangement is an electro-optically tunable color filter that sequentially generates the requisite color filters.

The present invention thereby provides a means of obtaining a color image along with range information for each point on the image. The invention uses a scannerless range image capture method along with a color sequential technique for selecting the optical properties of the light progressing through the system. By combining several of the images, a full color texture image emerges along with a dense range image. The ability to accomplish this task is provided by having the range capture system as a camera attachment optically coupled with the image capture subsystem.

The advantage of this invention is that a single image capture system is required, thereby reducing cost, correlation and image capture variations. Moreover, the combined range and texture image is color instead of monochrome. The system does not require beam-splitters or difficult optical waveguides, and the overall system may be an attachment to a standard camera system.

These and other aspects, objects, features and advantages of the present invention will be more clearly understood and appreciated from a review of the following detailed description of the preferred embodiments and appended claims, and by reference to the accompanying drawings.

**BRIEF DESCRIPTION OF THE DRAWINGS**

FIG. 1 shows the main components of a color sequential scannerless range imaging system in accordance with the invention.

FIG. 2 is a diagram illustrating an image bundle and related data captured by the system shown in Figure 1.

FIG. 3 is a flow chart describing the functions performed by a controller component in the range imaging system shown in Figure 1.

FIG. 4 is a diagram of an image capture component of the imaging system shown in Figure 1.

FIG. 5 is a diagram of an illumination component of the imaging system shown in Figure 1.

FIG. 6 is a diagram showing further details of the interaction between the controller component and an image intensifier component of the imaging system shown in Figure 1.

FIG. 7 is a diagram of the passband of the IR filter used in a filter component of the imaging system shown in Figure 1 relative to the spectral characteristics of the image intensifier and the IR illuminator.

FIG. 8 is a diagram of the passbands of the color filters used in the filter component of the imaging system shown in Figure 1 relative to the spectral characteristics of the image intensifier and the color illuminator.

FIG. 9 provides further details of the filter component used to capture color texture and range images.

FIG. 10 shows a waveform useful in understanding the processing of the phase image portion of the image bundle shown in Figure 2.

FIG. 11 illustrates the assembly of the color texture image from the separate color images that are sequentially captured.

FIG. 12 is a block diagram of a known range imaging system which can be used to capture a bundle of images.

**DETAILED DESCRIPTION OF THE INVENTION**

Because range imaging devices employing laser illuminators and capture devices (including image intensifiers and electronic sensors) are well known, the present description will be directed in particular to elements forming part of, or cooperating more directly with, apparatus in accordance with the present invention. Elements not specifically shown or described herein may be selected from those known in the art. Certain aspects of the embodiments to be described may be provided in software. Given the system as shown and described according to the invention in the following materials, software not specifically shown, described or suggested herein that is useful for implementation of the invention is conventional and within the ordinary skill in such arts.

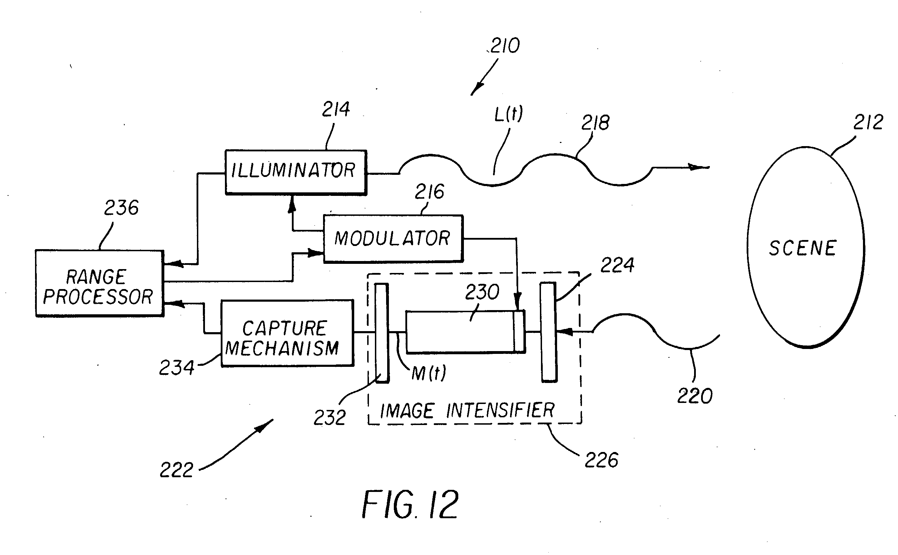

It is helpful to first review the principles and techniques involved in scannerless range imaging. Accordingly, referring first to Figure 12, a range imaging system 210 is shown as a laser radar that is used to illuminate a scene 212 and then to capture an image bundle comprising a minimum of three images of the scene 212. An illuminator 214 emits a beam of electromagnetic radiation whose temporal frequency is controlled by a modulator 216. Typically, in the prior art, the illuminator 214 is a laser device which includes an optical diffuser in order to effect a wide-field illumination. The modulator 216 provides an amplitude varying sinusoidal modulation. The modulated illumination source is modeled by:

$$L(t) = \mu_L + \eta \sin(2\pi\lambda t) \qquad\qquad \text{(Eq. 1)}$$

where $\mu_L$ is the mean illumination, $\eta$ is the modulus of the illumination source, and $\lambda$ is the modulation frequency applied to the illuminator 214. The modulation frequency is sufficiently high (e.g., 12.5 MHz) to attain sufficiently accurate range estimates. The output beam 218 is directed toward the scene 212 and a reflected beam 220 is directed back toward a receiving section 222. As is well known, the reflected beam 220 is a delayed version of the transmitted output beam 218, with the amount of phase delay being a function of the distance of the scene 212 from the range imaging system. The reflected beam 220 strikes a photocathode 224 within an image intensifier 226, thereby producing a modulated electron stream proportional to the input amplitude variations. The amplification function of the image intensifier 226 is modeled by:

$$M(t) = + \mu_M + \gamma \sin(2\pi\lambda t) \qquad\qquad \text{(Eq. 2)}$$

where $\mu_M$ is the mean intensification, $\gamma$ is the modulus of the intensification and $\lambda$ is the modulation frequency applied to the intensifier 226. The purpose of the image intensifier is not only to intensify the image, but also to act as a frequency mixer and shutter. Accordingly, the image intensifier 226 is connected to the modulator 216, causing the gain of a microchannel plate 230 to modulate. The electron stream from the photocathode 224 strikes the microchannel plate 230 and is mixed with a modulating signal from the modulator 216. The modulated electron stream is amplified through secondary emission by the microchannel plate 230. The intensified electron stream bombards a phosphor screen 232, which converts the energy into a visible light image. The intensified light image signal is captured by a capture mechanism 234, such as a charge-coupled device (CCD) or a photographic film. The captured image signal is applied to a range processor 236 to determine the phase delay at each point in the scene. The phase delay term $\omega$ of an object at a range $\rho$ meters is given by:

$$\omega = \frac{2\rho\lambda}{c} \bmod 2\pi \qquad\qquad \text{(Eq. 3)}$$

where $c$ is the velocity of light in a vacuum. Consequently, the amplitude of the reflected light at the input to the capture system is modeled by:

$$R(t) = \mu_L + \kappa \sin(2\pi\lambda t + \omega) \qquad\qquad \text{(Eq. 4)}$$

where $\kappa$ is the modulus of illumination reflected from the object. The pixel response P at this point is an integration of the reflected light and the effect of the intensification:

$$P = \int_0^{2\pi} R(t)M(t)dt = 2\mu_L\mu_M + \kappa\pi\gamma \cos(\omega) \qquad\qquad \text{(Eq. 5)}$$

In the range imaging system disclosed in the aforementioned Scott patent, a reference image is captured during which time the micro-channel plate is not modulated, but rather kept at a mean response. The range is estimated for each pixel by recovering the phase term as a function of the value of the pixel in the reference image and the phase image.

A preferred, more robust approach for recovering the phase term is described in the aforementioned Ray et al. patent (U.S. Patent No. 6,118,946), which is incorporated herein by reference. Instead of collecting a phase image and a reference image, this approach collects at least three phase images (referred to as an image bundle). This approach shifts the phase of the intensifier 226 relative to the phase of the illuminator 214, and each of the phase images has a distinct phase offset. For this purpose, the range processor 236 is suitably connected to control the phase offset of the modulator 216, as well as the average illumination level and such other capture functions as may be necessary. If the image intensifier 226 (or laser illuminator 214) is phase shifted by $\theta_i$, the pixel response from equation (5) becomes:

$$P_i = 2\mu_L\mu_M\pi + \kappa\pi\gamma\cos(\omega+\theta_i) \qquad\qquad \text{(Eq. 6)}$$

It is desired to extract the phase term $\omega$ from the expression. However, this term is not directly accessible from a single image. In equation (6) there are three unknown values and the form of the equation is quite simple. As a result, mathematically only three samples (from three images) are required to retrieve an estimate of the phase term, which is proportional to the distance of an object in the scene from the imaging system. Therefore, a set of three images captured with unique phase shifts is sufficient to determine $\omega$. For simplicity, the phase shifts are given by $\theta_k = 2\pi k / 3$; $k = 0,1,2$. In the following description, an image bundle shall be understood to constitute a collection of images which are of the same scene, but with each image having a distinct phase offset obtained from the modulation applied to the intensifier 226. It should also be understood that an analogous analysis can be performed by phase shifting the illuminator 214 instead of the intensifier 226. If an image bundle comprising more than three images is captured, then the estimates of range can be enhanced by a least squares analysis using a singular value decomposition (see, e.g., W. H. Press, B.P. Flannery, S.A. Teukolsky and W.T. Vetterling, Numerical Recipes (the Art of Scientific Computing), Cambridge University Press, Cambridge, 1986).

If images are captured with $n \geq 3$ distinct phase offsets of the intensifier (or laser or a combination of both) these images form an image bundle. Applying Equation (6) to each image in the image bundle and expanding the cosine term (i.e., $P_i = 2\mu_L\mu_M\pi + \kappa\pi\gamma(\cos(\omega)\cos(\theta_i) - \sin(\omega)\sin(\theta_i))$) results in the following system of linear equations in n unknowns at each point:

$$\begin{pmatrix} P_1 \\ P_2 \\ \vdots \\ P_n \end{pmatrix} = \begin{pmatrix} 1 & \cos\theta_1 & -\sin\theta_1 \\ 1 & \cos\theta_2 & -\sin\theta_2 \\ \vdots & \vdots & \vdots \\ 1 & \cos\theta_n & -\sin\theta_n \end{pmatrix} \begin{pmatrix} \Lambda_1 \\ \Lambda_2 \\ \Lambda_3 \end{pmatrix} \qquad\qquad \text{(Eq. 7)}$$

where $\Lambda_1 = 2\mu_L\mu_M\pi$, $\Lambda_2 = \kappa\pi\gamma\cos\omega$, and $\Lambda_3 = \kappa\pi\gamma\sin\omega$. This system of equations is solved by a singular value decomposition to yield the vector $\Lambda = [\Lambda_1,\Lambda_2,\Lambda_3]^\tau$. Since this calculation is carried out at every (x,y) location in the image bundle, $\Lambda$ is really a vector image containing a three element vector at every point. The phase term $\omega$ is computed at each point using a four-quadrant arctangent calculation:

$$\omega = \tan^{-1}(\Lambda_3, \Lambda_2) \qquad\qquad \text{(Eq. 8)}$$

The resulting collection of phase values at each point forms the phase image. Once phase has been determined, range $r$ can be calculated by:

$$r = \omega\frac{c}{4\pi\lambda} \qquad\qquad \text{(Eq. 9)}$$

Equations (1)-(9) thus describe a method of estimating range using an image bundle with at least three images (i.e., n=3) corresponding to distinct phase offsets of the intensifier or illuminator.

A scannerless range imaging camera may operate either as a digital camera or a camera utilizing film. In the case of a film based system there are some other requirements, particularly registration requirements, that need to be met. These requirements and means for satisfying them are described in the aforementioned U. S. Patent No. 6,118,946.

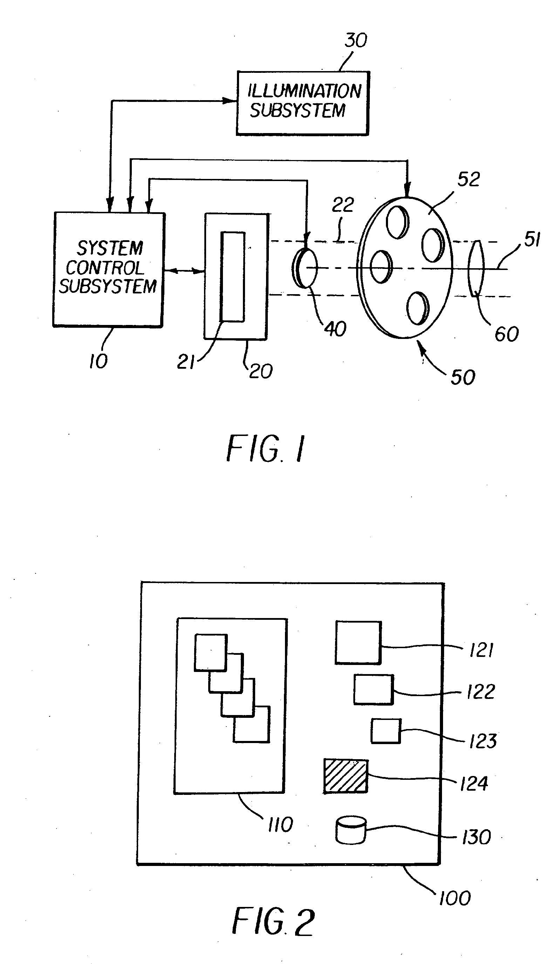

Referring now to Figure 1, the overall image and range capture system associated with a color scannerless range imaging (SRI) camera is shown to comprise of six main components or subsystems in accordance with the present invention. The first component is a system control subsystem 10, which has the responsibility of controlling and sequencing all major actions within the overall system. This subsystem will be described in greater detail below. The second component is an image capture subsystem 20, which provides the means of capturing an image. In a preferred embodiment, the image capture subsystem 20 includes a camera body including an image capture element 21, which may be either a photographic film or an electronic sensor such as a charged-coupled-device (CCD). The image capture subsystem 20 is able to capture a plurality of images, and further is interconnected with the system control subsystem 10 for receiving control signals to, among other things, initiate an image capture. Although not shown in detail, a means for advancing the image capture subsystem to prepare for a successive image capture must be available. Such details are commonly available in conventional film and digital cameras.

The third component is an illumination subsystem 30, which produces a high-frequency amplitude modulated light source of a desired average amplitude, amplitude modulus and frequency. As described in connection with Figure 12, the system (e.g., either the illumination subsystem 30 or the system control subsystem 10) provides adequate control for the phase of the amplitude modulation to be shifted to a set of prescribed phase offsets. It is also useful for the illumination to have a preferred operating wavelength. The fourth component is an image intensifier subsystem 40, which has two purposes: signal amplification and, more importantly for this system, modulation of the gain. Modulation of the image intensifier subsystem 40 is preferably at the same frequency as the modulation frequency of the illumination subsystem 30.

The fifth component is a color filter subsystem 50, which is placed in an optical path 51 between the image intensifier subsystem 40 and the objects comprising the scene. The purpose of the color filter subsystem 50 is to provide a time varying sequence of color and infrared filtration. More specifically, the color filter subsystem 50 provides a sequence of filtration including infrared filtration for the range measurements, and color filtration for the color texture image. In a preferred embodiment, the color filtration includes a time-varying sequence of red, green and blue filtration, although other colors such as cyan, magenta and yellow may be provided.

In the preferred embodiment, the color filter subsystem 50 is a color filter wheel 52 in which individual infrared, red, green and blue color filters in the wheel 52 are sequentially placed in the optical path 51 to allow light in preferred spectral bands to proceed through the device for subsequent processing. The color filter wheel 52 may also be motorized in order to increment between specified filters automatically or under electro-mechanical controls. A technology that affects a result similar to the color wheel without the need for moving parts is an electro-optically tunable color filter. In this case, a single stationary device (or group of devices) is placed in the optical path and the optical transmission characteristics of the device are altered electronically. A lens 60 is a standard lens, and is used to form an image of the objects in the scene on the input face of the image intensifier subsystem 40.

Figure 2 illustrates the image bundle associated with the color scannerless range imaging (SRI) camera shown in Figure 1, which is a notion that helps to simplify subsequent discussion of the system. The image bundle 100 is a container of images captured by the system along with information about these images. There are two types of images, phase images 110 that are used directly for the range estimation process, and color plane images 121, 122, and 123, that are subsequently combined in order to produce a color texture image 124. The color of the color plane images depend on the color filtration provided by the color filter subsystem 50, and in the preferred embodiment are red, green and blue images. The color texture image is derived from the color plane images and is a product of the image bundle. The image bundle 100 also contains information regarding the images in the image bundle, and this information is commonly referred to as metadata 130. Examples of the type of information comprising the metadata include:

1) the number of images in the image bundle;
2) which images are phase images and the associated phase offsets;
3) which images are the color plane images and the color plane each image represents;
4) the size of the image in terms of pixels (if a digital system);
5) the overall focal length and image plane dimensions; and
6) the overall system frequency.

This is not an exhaustive list, as the metadata might contain information useful for other aspects of the system, not directly associated with the range estimation process.

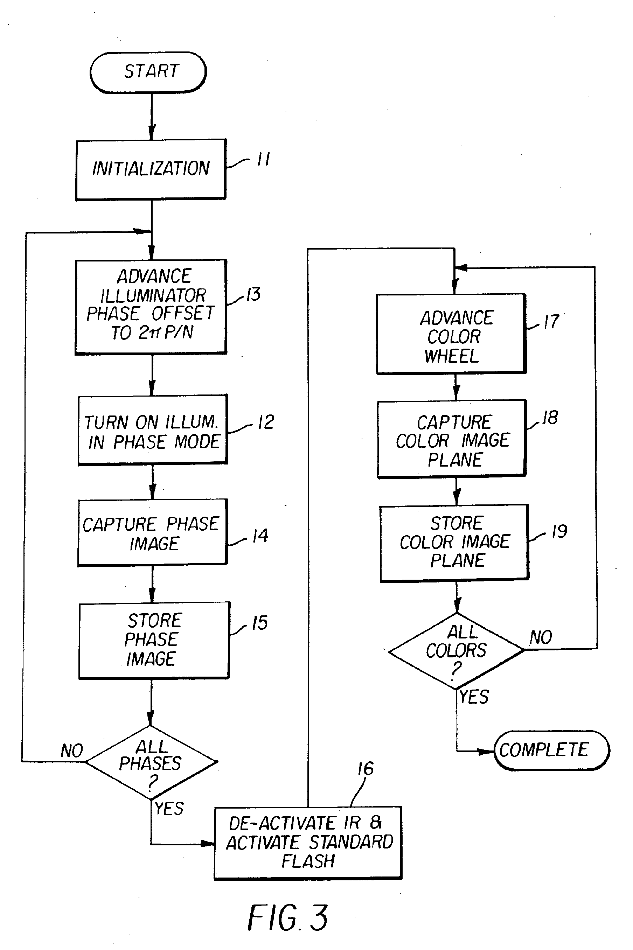

Referring to Figure 3, the controller functions of the system are described. When the system is activated, the controller conducts an initialization procedure 11. The controller initializes internal parameters such as:

1) setting the number of phase images currently captured to zero;
2) accepting the number of phase images desired by the user;
3) assuring the color filter subsystem 50 has the infrared filter in place;

4) synchronizing the image intensifier subsystem 40 and the illumination subsystem 30;

5) setting the infrared illumination mode (of the illumination subsystem 30) to active; and

6) establishing the image bundle 100.

The controller queries the image capture subsystem 20 to determine the focal length and other values required by the image bundle 100, and stores them in the established space in the image bundle 100. The system begins by collecting the phase images, and therefore the illumination subsystem 30 is initially set to the infrared illumination mode 12. Then modulation phase shift of the illuminator is advanced (13) by shifting the phase by $2\pi P/N$ radians, where P is the number of the current phase image and N is the total number of phase images to be collected. The phase image is captured (14) and placed (15) in internal storage within the image bundle. If all phase images are not yet collected, then the current phase image number is incremented (13) and the process is repeated. Otherwise, the illuminator is changed from the IR mode to the standard illumination mode 16 for the collection of visible light images. Three images are then collected iteratively. The procedure is to advance (17) the color wheel filter one-quarter turn, capture and collect (18) a color plane image and store (19) the color plane image in the image bundle 100. Once all the color plane images are collected, the data for the image bundle is complete and ready to be transferred off the system for additional processing. (As was described above, it will be appreciated that the color wheel can be replaced by an electronically tuned filter, and the advancement (17) of the color filter wheel will be replaced by the sequential activation (17) of the tuned filter.)

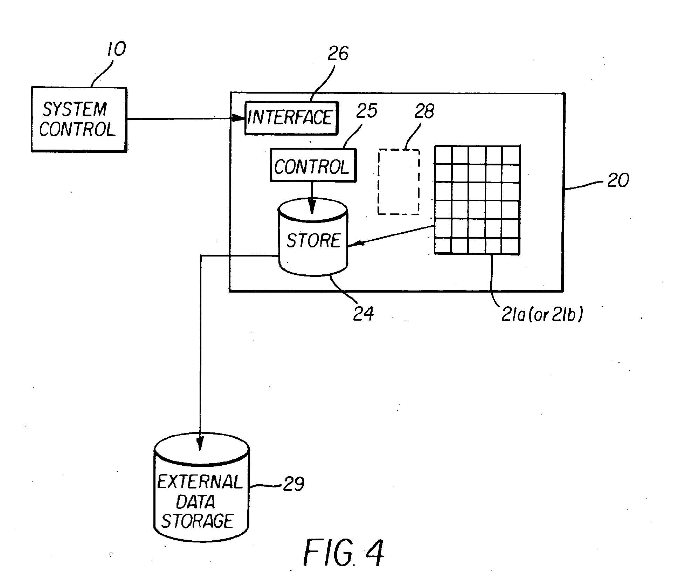

Referring to Figure 4, the image capture subsystem 20 shares many aspects of a standard film or digital camera body. For the present invention, the image capture subsystem 20 is enabled to capture color images. In the case of the image capture element 21 comprising a digital imager 21a, a monochrome image sensor is a preferred embodiment although this is not critical. A digital camera body with a normal color image sensor will also operate effectively. Likewise, in the case of a film-based system, a monochrome film 21b is preferred as the image capture element 21. Furthermore, a method of introducing fiducial markings on the film for alignment of the color texture image and the range map is preferred in film-based systems, as is described in the aforementioned U.S. Patent No. 6,118,946, which is incorporated herein by reference.

The image capture subsystem 20 also includes a storage subsystem 24 for storing all images 110, 121, 122 and 123 in the image bundle 100. In a preferred embodiment, the storage subsystem 24 stores a color texture image 124 in addition to the other images in the image bundle. This can be accomplished by on-camera storage, such as a film with multiple frames or a digital storage mechanism, such as an internal memory with subsequent transfer to a PCMCIA card or floppy disk. The image capture subsystem 20 includes an interface for accepting and operating from a remote triggering source (such as the control subsystem 10) to cause the image capture subsystem 20 to capture an image. Alternatively, image capture may be initiated from the image capture subsystem itself, such as from a shutter release button (not shown). Once an image is recorded, the image capture subsystem must automatically prepare for an additional image capture. In the case of a film- based system, an automatic film advance 28 is activated. In the case of a digital camera, an on-board controller 25 may be provided to store the image data onto the storage subsystem 24 and clear internal buffers for a subsequent image. The controller 25 may also offload the image bundle to an external data storage 29, as required. This capability allows for the image bundle to be processed externally (not shown) and be utilized by devices having larger and faster processors. It should be appreciated that processing the image bundle on-board the system is feasible, although not always preferable due to processing requirements.

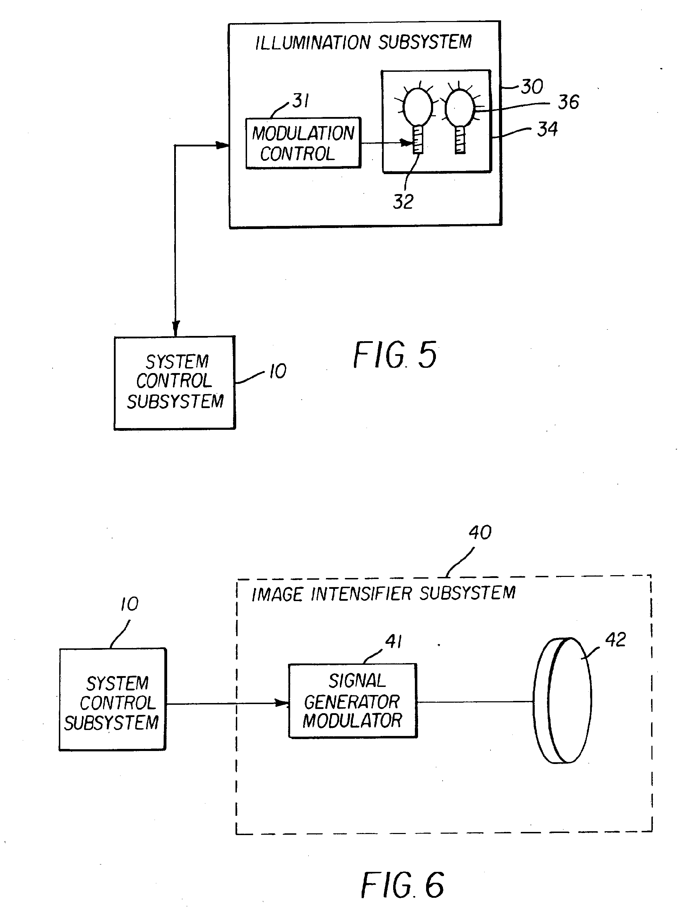

Referring to Figure 5, the illumination subsystem 30 produces amplitude-modulated light from an infrared light source 32 and controls the phase of the light from a modulation controller 31 to generate a phase shift in the modulated, transmitted beam. It is preferred that the infrared light source 32 be a package of light emitting diodes (LEDs) operative in the IR band, or a laser operative likewise in the IR band, that is amplitude- modulated at 12.5 megahertz. The preferred wavelength of the light is in a spectral band centered at 830 nm, as this provides an optimal response for the image intensifier subsystem 40. More importantly, this wavelength also provides a means of distinguishing the modulated light used for range imaging from the non-modulated visible light used for color texture imaging. A diffuser plate 34 serves to make the modulated beam more uniform, although it is not required that the illumination be uniform. In addition to the amplitude-modulated infrared source 32, the illumination subsystem 30 also includes a standard broadband visible illumination source 36 that is not modulated. This broadband visible source is similar to the flash unit in a standard camera system, which is well known and understood in this art.

The illumination system 30 is directed by the system control subsystem 10 to operate in one of the following two modes. In the first mode of operation, the visible flash 36 is placed in an "off" state and the bank of LED's 32 (or laser) is placed in an "on" state and amplitude-modulated according to one of a plurality of phase offsets relative to the modulation of the image intensifier subsystem 40. In the second mode of operation, the bank of LED's 32 (or laser) is placed in an "off" state and the system control subsystem 10 activates the visible flash 36 at the appropriate time. Alternatively, ambient illumination may be used for the visible color illumination if the ambient light intensity is sufficient. The illumination subsystem 30 also communicates with the system controller subsystem 10 to indicate that all systems are ready for use.

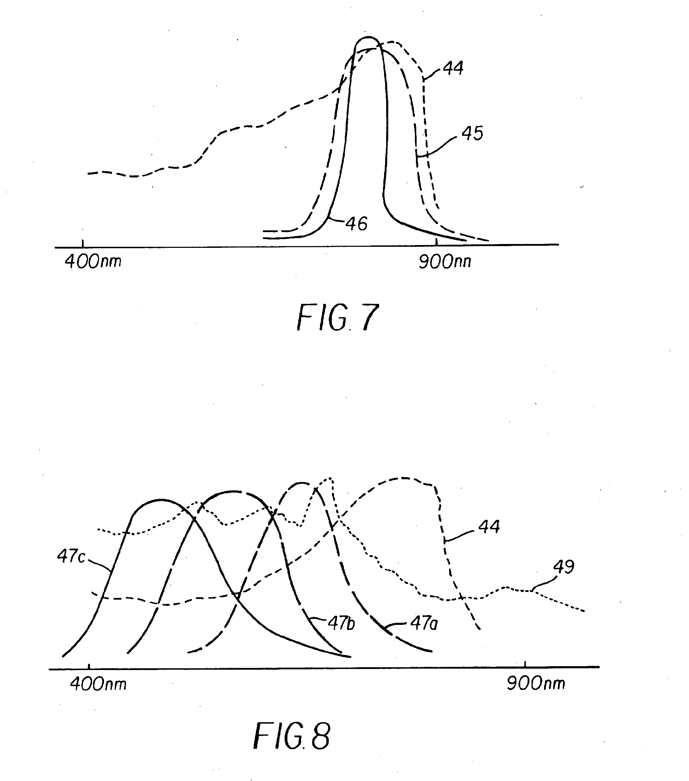

Referring to Figure 6, the system control subsystem 10 interacts with the image intensifier subsystem 40 in order to synchronize the modulation of the illumination subsystem 30. Contained in the image intensifier subsystem 40 is a signal generator 41 that controls the gain aspect of an image intensifier 42. The modulated gain provides a wave-like pattern that is beat against the modulated light cast by the illumination subsystem 30. As shown in Figure 7, the image intensifier 42 has a wavelength dependent response 44 and responds to both infrared light as well as visible light. The spectrum 45 of the amplitude-modulated portion of the illumination is limited to a relatively narrow band in the infrared. This light carries the base signal that is used to infer the range to objects in the scene. In order to maximize the signal-to-noise-ratio of the resulting phase images, a narrow band filter is placed in the optical path between the objects in the scene and the image intensifier 42, e.g., one of the filters in the filter wheel 52 will be such a narrow band filter. Ideally, the spectral transmission characteristics 46 of this filter correspond to the spectrum of the amplitude-modulated infrared source. Imposition of the infrared filter reduces to acceptable levels the amount of ambient visible light as well as the amount of infrared light outside the spectral pass band of the filter that is collected by the intensifier subsystem 40. Typically, a narrow band filter is used for this purpose where the band pass of the filter is preferably 10 nanometers, but wider bands up to 50 nanometers are acceptable. These filters are centered at the peak wavelength emitted by the IR illumination source 32. As shown in Figure 8, the spectral bands of the other filters and the spectral characterization of the visible light illumination have different profiles. For example, the red, green and blue color spectral properties 47a, 47b, 47c of the other filters in the color wheel 52, when used in conjunction with the image intensifier spectral response 44 and the illuminator spectral properties 45, cascade together to determine the system response for each color plane image 121, 122, 123.

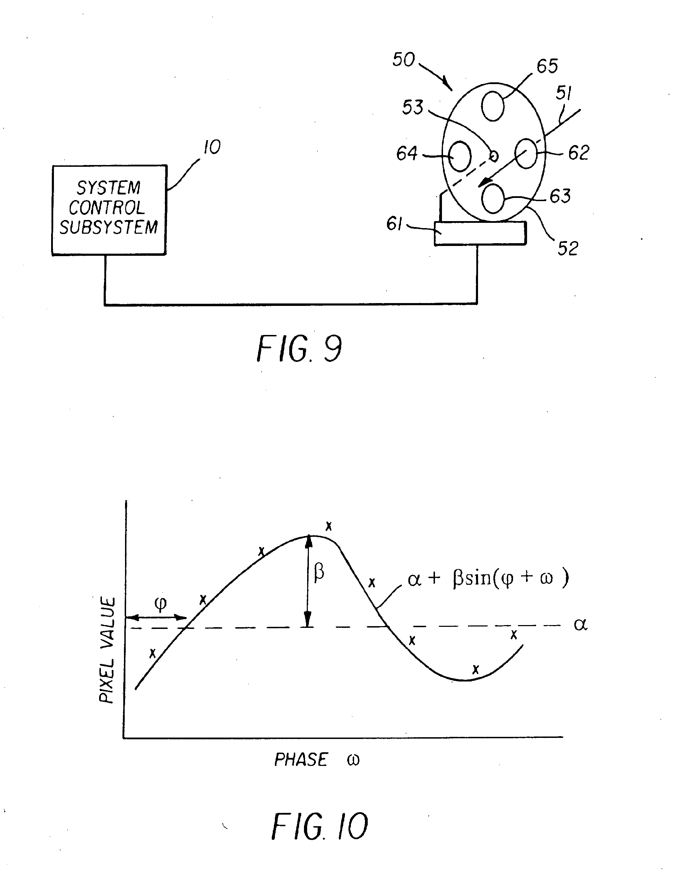

Figure 9 illustrates the color filter subsystem 50, and is helpful in showing the sequence of operations necessary to capture color texture and range images. In order to obtain a color texture image an infrared filter 62 is replaced successively by red, green and blue filters 63, 64, 65. The spectral band pass of each of these color filters is wider than that of the infrared filter in order that all wavelengths of visible light are passed by at least one of the color filters. Color filters of this type, i.e., that transmit light in specified bands, are well-known and have been used in many types of applications. For instance, Oriel Instruments manufactures a wide assortment of these filters. Moreover, it is well known to place a plurality of such filters sequentially in the optical path of an imaging system by means of a color filter wheel, where such wheels will typically hold up to eight individual filters. In the preferred embodiment, the individual filters are integrated into the color filter wheel 52, which is controlled by the system control subsystem 10 so as to rotate about its axis 53 and sequentially place each of the filters into the optical axis 51 of the system. The color wheel 52 operates by a stepper-motor 61 that rotates the wheel 52 one-quarter turn (i.e., 90 degrees) when a signal pulse is received from the system control subsystem 10. The control subsystem 10 has the responsibility of insuring that no pulses are sent during the capture of phase images. During this period of time the infrared filter 62 is in use and a change of filters is not desired.

An alternative to the color filter wheel is a system referred to as an electro-optically tunable color filter. This performs the same task as the color filter wheel, except that mechanical selection of color filters is replaced by electronic selection of spectral transmission properties. Changing voltages applied to the electro-optically tunable color filter controls these properties. This replacement has the advantage of having an overall smaller size and eliminating moving parts from the assembly. Such devices are available commercially: the ColorSwitch tunable filter from ColorLink Inc., Boulder Co., is an example.

Referring to Figure 10, a waveform is helpful in describing the processing of the phase image portion 110 of image bundle 100, which is used to determine the range estimates for each pixel in the image. For each range estimate the signal level at the same pixel location is measured for each phase image 110 in the image bundle. Each phase image 110 is captured during a period of time in which a unique phase shift is introduced between the sinusoidal modulations of the light source 32 and the image intensifier 42. The pixel intensity values and the phase offsets used in producing the image in the image bundle are directly associated. It is well known that there is a sinusoidal relationship between the pixel intensity values and the phase offset. By means of linear regression analysis, a fitting of the pixel intensity data with a sine-wave of the form $P_n = \alpha + \beta \sin(\varphi + \omega_n)$ can be accomplished. In this formula, $P_n$ represents the pixel intensity of the $n^{th}$ phase image and $\omega_n$ represents the associated phase offset. $\alpha$, $\beta$ and $\varphi$ are free parameters used to fit the curve. The parameter $\varphi$ corresponds to the phase shift incurred due to the time required for the light to travel from the illuminator to the object and back. Extracting this parameter from the fitted data is elementary. A simple conversion transforms the extracted value to the distance to the object. This method is well-known and is not described here in greater detail.

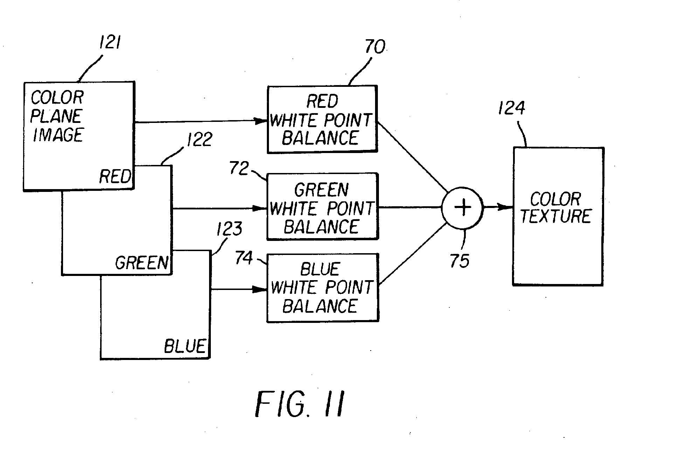

Referring to Figure 11, the color texture image is assembled from the three color plane images 121, 122, 123, which were captured when the red, green and blue filters 63, 64, 65 were successively placed in the optical path 51. After passing through the filters, the filtered light was processed by the image intensifier 42 and stored as color plane images in the image bundle 100. The image intensifier 42 has a spectral response that is wavelength dependent. The spectral response peaks at about 830 nm and drops off with decreasing wavelength. Consequently, creating a full color texture image by simply combining the individual color planes will not produce desirable results. The three color images should be adjusted relative to one another in order to achieve proper color balance. One simple method to accomplish this is to set a white point target and linearly modify the color planes individually to insure that the desired white point is obtained when the three color planes images are combined. More specifically, the values of the respective color planes are modified in red, green and blue "white point" balance stages 70, 72, 74 before being summed (75) to form the color texture image 124.

It should be appreciated that a beneficial aspect of the present invention is that the phase images and the color image are automatically registered with respect to one another. This result occurs because all images have been collected by the same optical assemblies, with the exception of the color filter. However, these filters are manufactured in a manner that image distortions are well within tolerable limits.

It is expected that the image intensifier 42 introduces noise into the color image. The level of noise might be objectionable for certain applications. However, some of this noise can be reduced by image processing techniques. Included among these, but without limitation, are noise reduction techniques such as wavelet de-noising algorithms, median filtering and spatial averaging. The pattern of the channels within the image intensifier might also be visible in the output image, and this pattern can be reduced by selective image processing where the locations of the pattern are known on the image plane. Since the pattern is constant across all images within the image bundle, selective processing can applied to the affected pixels to reduce the visibility of the pattern.

As mentioned above, it is a feature of the invention to provide an SRI attachment for a camera system for capturing both color and range information. The camera system would typically include a conventional digital or film camera body including the capture element 21 (Figure 1). In addition, the camera system would include the illumination subsystem 30, which itself could be an attachment to the camera body. The SRI attachment would include the components within the broken line 22 shown in Figure 1, i.e., the color filter subsystem 50, the stepper motor control 61 (Figure 9), the image intensifier subsystem 40 and, at least in some cases, the lens 60. The SRI attachment would be configured to interconnect with the standard lens mount on the camera body and contain electrical contacts for the usual interchange of signals with the camera body.

The color filter subsystem 50 would integrate (e.g., as the color wheel 52) within the SRI attachment the IR color filter that preferentially transmits the reflected modulated illumination and the plurality of other color filters that preferentially transmit the reflected unmodulated illumination. The control system 52 would interconnect with the system control subsystem 10 for driving the color filter subsystem 50 to sequentially provide each of the color filters in the optical path. The image intensifier 42 would receive the reflected modulated illumination from the scene, thereby generating phase image information needed for computing range information, and the camera body would capture the plurality of images output by the image intensifier, including (a) at least three phase images corresponding to the reflected modulated illumination, whereby the modulation of the reflected modulated illumination incorporates a phase delay corresponding to the distance of objects in the scene from the range imaging system, and (b) a plurality of color images of reflected unmodulated illumination corresponding to color in the scene.

The invention has been described with reference to a preferred embodiment. However, it will be appreciated that variations and modifications can be effected by a person of ordinary skill in the art without departing from the scope of the invention.

**Claims**

1.  A color scannerless range imaging system for capturing both color and range information from illumination reflected from a scene, said color scannerless range imaging system comprising:

    an illumination system for illuminating the scene with modulated illumination of a predetermined modulation frequency, whereby some of the modulated illumination is reflected from objects in the scene;
    a sequentially selectable color filter arrangement positioned in an optical path of the reflected illumination and comprised of a first color filter that preferentially transmits the reflected modulated illumination and a plurality of other color filters that preferentially transmit reflected unmodulated illumination;
    a control system for driving the color filter arrangement to sequentially provide each of the color filters in the optical path;
    an image intensifier receiving the reflected illumination and including a modulating stage for modulating the reflected modulated illumination from the scene with the predetermined modulation frequency, thereby generating phase images from which the range information is obtained; and
    an image capture system including an image responsive element for capturing a plurality of images output by the image intensifier, including (a) a plurality of phase images corresponding to the reflected modulated illumination, whereby the modulation of the reflected modulated illumination incorporates a phase delay corresponding to the distance of objects in the scene from the range imaging system, and (b) a plurality of color images of reflected unmodulated illumination corresponding to color in the scene.

2. The range imaging system as claimed in claim 1 wherein the image intensifier includes a micro-channel plate.

3. The range imaging system as claimed in claim 1 wherein the image responsive element captures a plurality of phase images corresponding to the reflected modulated illumination, wherein each phase image incorporates the effect of the predetermined modulation frequency together with a phase offset unique for each image.

4. The range imaging system as claimed in claim 2 wherein each unique phase offset $\theta$ is given by $\theta_i = 2\pi i/3$; $i = 0,1,2$.

5. The range imaging system as claimed in claim 1 wherein the predetermined modulating frequency is an infra-red frequency and said first color filter is an infra-red filter.

6. The range imaging system as claimed in claim 1 wherein said other color filters comprise red, green and blue filters.

7. The range imaging system as claimed in claim 1 wherein the illumination system also emits unmodulated illumination and the reflected unmodulated illumination includes at least some of the emitted unmodulated illumination.

8. The range imaging system as claimed in claim 1 wherein the reflected unmodulated illumination includes ambient illumination reflected from objects in the scene.

9. The range imaging system as claimed in claim 2 wherein the color filter arrangement is a color filter wheel.

10. The range imaging system as claimed in claim 2 wherein the color filter arrangement is an electro-optically tunable color filter.

11. A method for capturing both color and range information from illumination reflected from a scene, said method comprising the steps of:

illuminating the scene with modulated illumination of a predetermined modulation frequency, whereby some of the modulated illumination is reflected from objects in the scene;
sequentially positioning an arrangement of color filters in an optical path of the reflected illumination including a first color filter that preferentially transmits the reflected modulated illumination and a plurality of other color filters that preferentially transmit reflected unmodulated illumination;
using an image intensifier to modulate the reflected modulated illumination from the scene with the predetermined modulation frequency, thereby generating phase images from which range information is obtained; and
capturing a plurality of images output by the image intensifier, including (a) a plurality of phase images corresponding to the reflected modulated illumination when the first color filter is provided in the optical path, whereby the modulation of the reflected modulated illumination incorporates a phase delay corresponding to the distance of objects in the scene from the range imaging system, and (b) a plurality of color images of reflected unmodulated illumination corresponding to color in the scene when the other color filters are provided in the optical path.

FIG. 1

FIG. 2

START

INITIALIZATION — 11

ADVANCE ILLUMINATOR PHASE OFFSET TO 2π P/N — 13

TURN ON ILLUM. IN PHASE MODE — 12

CAPTURE PHASE IMAGE — 14

STORE PHASE IMAGE — 15

ALL PHASES ? — NO / YES

DE-ACTIVATE IR & ACTIVATE STANDARD FLASH — 16

ADVANCE COLOR WHEEL — 17

CAPTURE COLOR IMAGE PLANE — 18

STORE COLOR IMAGE PLANE — 19

ALL COLORS ? — NO / YES

COMPLETE

FIG. 3

FIG. 4

ILLUMINATION SUBSYSTEM

31

MODULATION
CONTROL

30
36
34

32

FIG. 5

SYSTEM
CONTROL
SUBSYSTEM

10

40

IMAGE INTENSIFIER SUBSYSTEM

10

SYSTEM
CONTROL
SUBSYSTEM

41

SIGNAL
GENERATOR
MODULATOR

42

FIG. 6

*FIG. 7*

*FIG. 8*

FIG. 9

FIG. 10

*FIG. II*

FIG. 12

EP 1 335 581 A1

**European Patent Office**

## EUROPEAN SEARCH REPORT

Application Number

EP 03 07 5252

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| Y,D | EP 1 107 021 A (EASTMAN KODAK CO) 13 June 2001 (2001-06-13) * abstract; figures 1,8 * * page 2, line 57 - page 7, line 51 * | 1-11 | H04N1/48 G01S17/89 |
| Y | US 5 475 428 A (HINTZ WAYNE W ET AL) 12 December 1995 (1995-12-12) * abstract; figure 1 * * column 3, line 27 - line 60 * | 1-11 | |
| A | EP 1 081 938 A (EASTMAN KODAK CO) 7 March 2001 (2001-03-07) * abstract; figure 3 * | 1,5,6,11 | |
| P,D, A | EP 1 178 333 A (EASTMAN KODAK CO) 6 February 2002 (2002-02-06) * abstract; figures 1,2,5,6 * | 1-11 | |

TECHNICAL FIELDS SEARCHED (Int.Cl.7)

H04N
G01S

The present search report has been drawn up for all claims

| Place of search | Date of completion of the search | Examiner |
|---|---|---|
| MUNICH | 17 April 2003 | Schinnerl, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 1 335 581 A1**

ANNEX TO THE EUROPEAN SEARCH REPORT
ON EUROPEAN PATENT APPLICATION NO.                    EP 03 07 5252

This annex lists the patent family members relating to the patent documents cited in the above-mentioned European search report.
The members are as contained in the European Patent Office EDP file on
The European Patent Office is in no way liable for these particulars which are merely given for the purpose of information.

17-04-2003

| Patent document cited in search report | | Publication date | Patent family member(s) | | Publication date |
|---|---|---|---|---|---|
| EP 1107021 | A | 13-06-2001 | EP<br>JP | 1107021 A2<br>2001215110 A | 13-06-2001<br>10-08-2001 |
| US 5475428 | A | 12-12-1995 | NONE | | |
| EP 1081938 | A | 07-03-2001 | EP<br>JP | 1081938 A2<br>2001100328 A | 07-03-2001<br>13-04-2001 |
| EP 1178333 | A | 06-02-2002 | US<br>EP<br>JP | 6456793 B1<br>1178333 A2<br>2002135639 A | 24-09-2002<br>06-02-2002<br>10-05-2002 |

EPO FORM P0459

For more details about this annex : see Official Journal of the European Patent Office, No. 12/82

21